(19) Europäisches Patentamt

European Patent Office

Office européen des brevets

(11) **EP 1 142 981 A2**

(12) **EUROPÄISCHE PATENTANMELDUNG**

(43) Veröffentlichungstag:
10.10.2001 Patentblatt 2001/41

(51) Int Cl.⁷: **C10J 3/84**, C10J 3/56,
F02C 3/28, H01M 8/06,
C10K 3/02

(21) Anmeldenummer: 01104052.4

(22) Anmeldetag: 20.02.2001

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: 23.03.2000 DE 10014184
03.08.2000 DE 10037762

(71) Anmelder: **FRAUNHOFER-GESELLSCHAFT ZUR
FÖRDERUNG DER
ANGEWANDTEN FORSCHUNG E.V.
80636 München (DE)**

(72) Erfinder: **Ising, Markus, Dipl.-Ing.
45475 Mühlheim/Ruhr (DE)**

(74) Vertreter: **Rösler, Uwe, Dipl.-Phys.
Rösler Patentanwaltskanzlei,
Landsberger Strasse 480a
81241 München (DE)**

(54) **Vorrichtung zur Stromerzeugung aus Biomasse durch Vergasung mit anschliessender katalytischer Beseitigung von Teerverbindungen aus dem Brenngas**

(57) Die Erfindung bezieht sich auf eine Vorrichtung zur Nutzung von, bei einer Vergasung von Biomasse entstehenden Gasen für eine direkte Energieumwandlung, mit einer Vergasereinheit, in die die zu vergasende Biomasse einbringbar ist und in der Zufuhr eines Vergasungsmittels Brenngase entstehen, einer der Vergasereinheit nachgeschalteten Gasreinigungseinheit, einer der Gasreinigungseinheit nachfolgenden Gaskühleinheit, einer der Gaskühleinheit nachfolgenden Entstaubungseinheit (=Filter) sowie mit einer, die in den gereinigten und gekühlten Gasen enthaltenen Energie wenigstens teilweise in elektrischen Strom umwandelnden Einheit.

Die Erfindung zeichnet sich dadurch aus, dass die Gasreinigungseinheit katalytisch aktives Material aufweist, das unmittelbar den aus der Vergasereinheit austretenden Gasen exponiert ist.

EP 1 142 981 A2

**Beschreibung**

**Technisches Anwendungsgebiet**

Das technische Anwendungsgebiet erstreckt sich auf eine Vorrichtung zur thermochemischen Vergasung kohlenstoffhaltiger Festbrennstoffe, insbesondere Biomassen, mit dem Zweck die im Vergaser erzeugten Brenngase zur Stromerzeugung, insbesondere mittels Verbrennungskraftmaschinen (z.B. Gasmotor), zu nutzen. Üblicherweise geschieht dies zunächst durch Umwandlung von chemischer Energie in thermische Energie, welche in einer Kraftmaschine Arbeit verrichtet und dadurch mechanische Energie (Rotationsenergie) erzeugt mit der wiederum ein elektrischer Generator angetrieben wird. Der Leistungsbereich der Energieerzeugungsanlagen liegt typischerweise bei 50 bis 5000 kW$_{el}$.

Die erfindungsgemäße Ausgestaltung der Vorrichtung gestattet es, die der Gaserzeugung nachgeschalteten Prozeßeinheiten zu betreiben, ohne dass die bei der Vergasung als Nebenprodukt entstehenden Teerverbindungen zu Funktionsstörungen führen. Dies wird erreicht durch eine selektive katalytische Spaltung der Teere in nutzbares Brenngas.

Unter dem Begriff Teer sind in diesem Zusammenhang alle bei der Vergasung entstehenden Kohlenwasserstoffe gefaßt, die bei Abkühlung des Gases auf die für die Nutzung notwendige Temperatur ihren gasförmigen Aggregatzustand verlassen und die dabei einher gehend mit dieser Eigenschaftsänderung den Gesamtprozeß in seiner Funktion nachhaltig stören.

**Stand der Technik**

Bei der thermochemischen Vergasung von Biomassen entsteht neben brennbarem Nutzgas auch ein Gemisch kondensierbarer bzw. resublimierbarer Kohlenwasserstoffe (Teere), die bei den hohen Temperaturen der Gaserzeugung (> 700 °C) dampfförmig im Gas vorliegen. Für die Nutzung des Brenngases in Aggregaten, die dem Zwecke der Stromerzeugung dienen, muß das Brenngas abgekühlt werden, wodurch es zur Auskondensation bzw. Resublimation der Teere kommt. Hierdurch werden nachgeschaltete Prozesseinheiten in ihrer Funktion stark beeinträchtigt. Um die Brenngase für diese Anwendung nutzbar zu machen, ist daher eine weitgehende Beseitigung der störenden Nebenprodukte (Teere) erforderlich.

Die bei der Biomassevergasung entstehenden Teerkomponenten setzen sich hauptsächlich aus gasförmigen einfachen und komplexeren, meist polyzyklischen, aromatischen Kohlenwasserstoffen mit Molmassen von bis zu 300 g/mol zusammen. Hinsichtlich der Eignung eines Brenngases zur stromerzeugenden Nutzung ist die Minimierung jener Komponenten wichtig, die bei der Abkühlung des Gases schon ab 300°C kondensieren oder resublimieren.

Für die sich daraus ergebende Notwendigkeit der Teerbeseitigung existieren unterschiedliche Verfahrensansätze, die verschieden gute aber insgesamt gesehen unzureichende Gasqualitäten realisieren können. Darüber hinaus sind es bei einigen Lösungsansätzen auch die hohen Kosten für Investition und/oder Betrieb, die das Gesamtverfahren betriebswirtschaftlich unattraktiv machen.

Bei der Gaserzeugung im Festbett bzw. Wanderbett, bei dem grobstückige Biomasse unter Schwerkrafteinfluß im Massenfluß einen Vergasungsschacht von oben nach unten durchwandert, während sie dabei langsam vergast, werden i. w. zwei Grundprinzipien unterschieden. Die Gegenstromvergasung ist zwar vergleichsweise technisch einfache und anspruchslos, produziert jedoch Brenngase mit extrem hohen Teergehalten.

Dagegen gelingt es mit der technisch anspruchsvolleren Gleichstromvergasung zumindest bei kleinen Einheiten Brenngase ausreichend guter Qualität für die Stromerzeugung darzustellen. Dies wird erreicht durch eine heiße Glutzone, die das teerhaltige Gas durchströmt, bevor es den Vergaser verläßt. Dabei werden die Teerverbindungen an den heißen Oberflächen der Kokspartikeln weitgehend gespalten. Bei Anlagen > 50 kW$_{el}$ bzw. zugehörigen Vergasungseinheiten > 200 kW$_{th}$ wird es zunehmend schwieriger, das Brennstoffbett im gleichmäßigen Fluß zu bewegen, so dass bei größeren Anlagen auch hier Teere in zu hoher Konzentration im Produktgas zu finden sind. Konstruktive Abarten der beiden Grundtypen von Festbettvergasern lösen das Teerproblem ebenfalls nicht überzeugend, so dass eine nachgeschaltete Teerbehandlungsstufe i. d. R. unverzichtbar ist.

Bei der Gaserzeugung in Wirbelschichtanlagen ist es möglich, schon während des Pyrolysevorganges, durch Zumischung katalytisch wirkendender Additive direkt in das Bettmaterial die Teergehalte im Produktgas zu senken. In verschiedenen Arbeiten sind solche Vorgehensweisen beschrieben worden (SIMELL 1992, OLIVARES 1997). Diese Verfahren reichen jedoch nicht aus, um die Qualitätsanforderungen des Brenngases für die Nutzung zur Stromerzeugung zu erfüllen.

Eine der Vergasungsanlage als Teerbehandlungsstufe nachgeschaltete zirkulierende Wirbelschicht, in der das teerbeladene Gas auf hohem Temperaturniveau mit katalytisch wirkendem Dolomit in Kontakt gebracht wird, erreicht hohe Gasqualitäten, wobei der erforderliche Investitions-und Betriebskostenaufwand allerdings enorm hoch ist (RENSFELT 1997).

Die Teerentfernung aus dem Brenngas durch eine Gaswäsche entspricht im Gegensatz zur Rauchgaswäsche in Kraftwerken nicht dem Stand der Technik und ist insbesondere wegen der hohen Investitions- und Betriebskosten nicht praktikabel (THOME-KOZMIENSKY 1985, BORN 1998). Die Teerabscheidung aus Gasen durch Gaswäsche bzw. wässerige Quenche ist vor allem aus der Kokereitechnik bekannt, wobei die Teerkonzentrationen hierbei um mehrere Größenordnungen höher sind als bei der Biomassevergasung und zudem die Anforderungen an die Gasreinheit weitaus geringer sind. Der Nachteil der Gaswaschverfahren bezüglich der energetischen Ausnutzung der eingesetzten Biomassen liegt auch im Verlust des Heizwertes der abgeschiedenen Kohlenwasserstoffe.

Häufig werden Verfahren beschrieben, in denen die Gasreinigung mittels einem dem Gaserzeuger nachgeschalteten Festbettreaktor erfolgt (ORIO 1997, SIMELL 1994, ALDEN 1988). Das Produktgas wird hier durch ein aus katalytisch wirkenden Partikeln bestehendes Festbett geleitet. Bei der normalerweise in der Praxis mehr oder weniger starken Staubbeladung des Produktgases kommt es jedoch zur Verunreinigung und Verstopfung des Festbettreaktors und damit zu Blockierungen und zu Desaktivierungen der katalytisch wirkenden Bestandteile. Eine Abreinigung und Regenerierung der Festbettkatalysatoren während des Betriebes ist schwer durchzuführen.

Durch die DE-OS1542624 ist ein Verfahren zur katalytischen Spaltung von gasförmigen Kohlenwasserstoffen bekannt, bei dem die Gase durch ein ringförmiges Katalysatorbett hindurchgeleitet werden, wobei eine äußere Beheizung durch integrierte Brenner erfolgt.

Durch die EP0360505 ist ein Apparat zur Reformierung von Kohlenwasserstoffen bekannt, wobei das Gas durch verschiedene Reformierungskatalysatorbetten hindurchgeleitet wird und eine Beheizung durch einen zentral angeordneten Brenner erfolgt.

Durch JP60235634 ist ein endothermer Reaktor zur Gasaufbereitung bekannt, in welchem das kohlenwasserstoffhaltige Gas durch ein mehrere Katalysatorschichten enthaltenes Rohr geleitet wird.

Durch DE4430645 ist ein Reaktor zur katalytischen Umsetzung von Abgasen, insbesondere für Abgase aus Verbrennungskraftmaschinen, bekannt. Hierbei wird der Abgasstrom durch einen in einem metallischen Mantel angeordneten katalytisch wirkenden Wabenkörper geleitet.

Aus DE 19721630 ist eine Vorrichtung zur Reformierung von Kohlenwasserstoffen bekannt, die sich aus einem Strahlungsbrenner und einem Reformierreaktor, welcher Metallwabenkörper mit einer Katalysatorbeschichtung enthalten kann, zusammensetzt. Mit Hilfe der Vorrichtung sollen vor allem im kleinen Leistungsbereich kohlenwasserstoffhaltige Gase in Synthesegase umgesetzt werden.

**Darstellung der Erfindung**

Der Erfindung liegt die Aufgabe zugrunde, die bekannten Vorrichtungen derart abzuändern, daß das zur Stromerzeugung zu nutzende Brenngas nur noch so geringe Mengen an kondensierbaren Kohlenwasserstoffen (Teeren) enthält, daß ein störungsfreier Betrieb des Stromerzeugers dauerhaft möglich ist. Darüber hinaus stellt die erfindungsgemäße Vorrichtung eine Methode zur Gaskonditionierung zur Verfügung, welche auch unter betriebswirtschaftlichen Gesichtspunkten vertretbar ist.

Ist eine entsprechende Reinheit des Brenngases sichergestellt, kann dieses in geeigneten nachgeschalteten Aggregaten (z. B. Gasmotor, Gasturbine, Stirlingmotor, Brennstoffzelle u.a.) zur Energiewandlung verwendet werden, und es entsteht auf diese Weise ein vorteilhafter verfahrenstechnischer Prozess zur Direktverstromung des regenerativen Energieträgers Biomasse.

Aufgrund integrierter Komponenten zur Abreinigung und Regeneration des katalytisch wirkenden Materials wird ein kontinuierlicher Verfahrensbetrieb ermöglicht.

Durch geeignete Maßnahmen wird der Ablauf von Crack-Reaktionen, die zur Desaktivierung führen können, weitgehend vermieden.

Bei gebräuchlichen Vorrichtungen ist ein direktes Einleiten des vom Gaserzeuger kommenden Gases in ein stromerzeugendes Aggregat nicht möglich, da die im Gas enthaltenen Teere im Stromerzeuger auskondensieren und einen störungsfreien kontinuierlichen deshalb Betrieb nicht erlauben. Daher müssen die im Gas enthaltenen Teere in einer, dem Stromerzeuger vorgeschalteten Prozeßstufe aus dem Brenngas entfernt werden. Diese Anforderungen werden durch die erfindungsgemäße Vorrichtung erfüllt.

Die herkömmlichen Vorrichtungen sind häufig auf einen schmalen Leistungsbereich eingeschränkt. Die erfindungsgemäße Vorrichtung läßt sich durch Änderung der Vorrichtungsdimensionen in einem breiten Leistungsspektrum einsetzen.

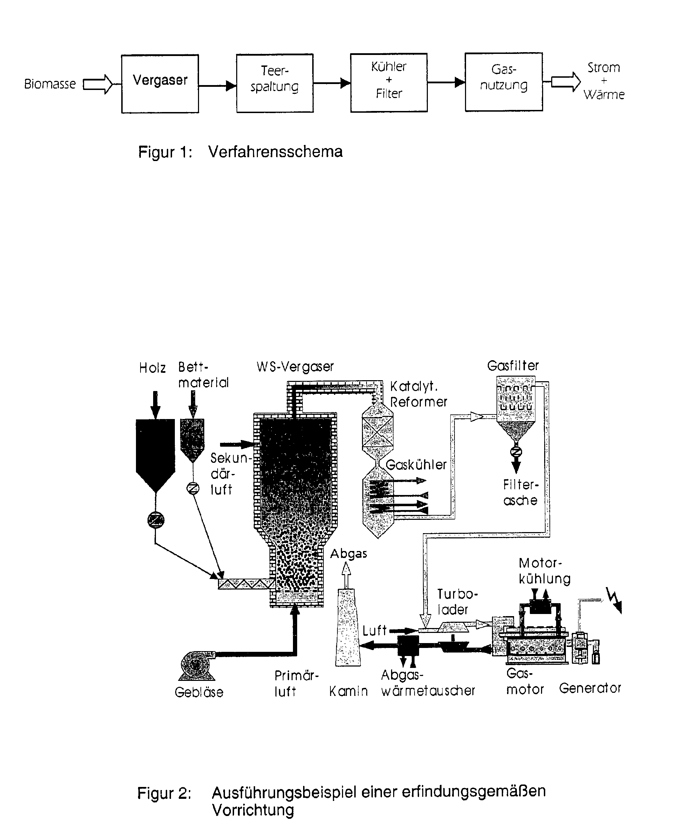

Bei der erfindungsgemäßen Vorrichtung wird den Prozessstufen der Brenngaserzeugung (Vergasung) und der Brenngasnutzung (z. B. Gasmotor, Gasturbine, Brennstoffzelle, Stirlingmotor u. a.) eine geeignete Prozessstufe in Gestalt einer vorteilhaft ausgebildeten Katalysatorstufe zwischengeschaltet, welche die Teerverbindungen weitestgehend aus dem Gas entfernt (s. Fig. 1).

Innerhalb der Katalysatorstufe erfolgt die Beseitigung der Teere durch den Einsatz eines oder mehrerer spezieller katalytisch aktiver Materialien, welche die Spaltung der Teere katalysieren. In Anwesenheit der katalytischen Oberflächen werden die Teerverbindungen durch chemische Reaktion mit anderen Gasbestandteilen in kleinere Moleküle gespalten, die den Heizwert des Gases nutzbringend erhöhen.

Dies geschieht durch den Einsatz eines katalytisch aktiven Materials, welches die im Vergasungsreaktor gebildeten Teere (Kohlenwasserstoffe der allgemeinen Zusammensetzung $C_nH_m$) im Temperaturbereich von 700°C bis 1000°C mit Teilen der Gashauptkomponenten gemäß den nachstehender Reaktionsgleichungen in die brennbaren Nutzgase CO und $H_2$ chemisch umwandelt (katalytische Reformierung):

$$C_nH_m + n\ H_2O \Leftrightarrow n\ CO + (n+m/2)\ H_2$$

$$C_nH_m + n\ CO_2 \Leftrightarrow 2n\ CO + (m/2)\ H_2$$

Die Vorrichtung zur Beseitigung der Teere aus dem bei der Biomassevergasung entstehenden Produktgas durch katalytische Spaltung wird technisch derart ausgebildet, dass das Gas mit geeigneter Verweilzeit durch diese hindurchgeleitet wird und die katalytisch aktives Material enthält. Das trägerfixierte Katalysatormaterial ist in kanalförmiger Ausgestaltung auf einem Tragegestell in einen thermisch isolierten Behälter eingebaut, wobei die Kanäle parallel zur Strömungsrichtung verlaufen. Die Kanalquerschnitte werden möglichst klein gewählt, um kleine mittlere freie Weglängen für die gas- bzw. dampfförmigen Teerkomponenten zu realisieren und somit den Kontakt der Gase mit der Katalysatorfläche sicherzustellen. Die parallele Anordnung vieler solcher Kanäle ergibt eine Wabenstruktur.

In die Vorrichtung konstruktiv integriert sind Vorrichtungen zur Abreinigung und Regenerierung des katalytisch wirkenden Materials. Durch Zugabe von geeigneten gas- oder dampfförmigen Substanzen mit Hilfe von Eindüsungsvorrichtungen, kann eine Spülung und Regenerierung des Katalysators erreicht werden. Dadurch wird eine Beeinträchtigung der mit dem Produktgas in Kontakt tretenden Katalysatoroberflächen durch staub- und kohlenstoffhaltige Ablagerungen vermieden. Die erfindungsgemäße Ausgestaltung der Vorrichtung gestattet daher den Einsatz der Vorrichtung auch bei staubhaltigen Produktgasen. Durch periodische Anwendung der Abreinigungsmaßnahmen während des Betriebes wird eine Desaktivierung des Katalysators durch oberflächliche Feststoffablagerungen verhindert.

Weiterhin kann erfindungsgemäß mittels der Eindüsmöglichkeit innerhalb der Vorrichtung eine partielle Oxidation durchgeführt werden.

**Ausführungsbeispiel**

Ein Ausführungsbeispiel des der Vorrichtung zugrundeliegenden Verfahrens wird in die Figur 2 (Verfahrensschema) wiedergegeben.

Als Ausgangsmaterial wird beispielhaft die Biomasse Holz verwendet. Das Holz wird in einem kontinuierlichen Vorgang in einem Wirbelschichtvergaser mittels des Vergasungsmittels Luft zu Brenngas umgewandelt. Der Vorgang vollzieht sich in einem wirbelnden Sandbett bei Temperaturen von ca. 900 C. Nach dem Verlassen des Vergasers wird das heiße Rohgas durch den katalytischen Reformer geleitet, wo die im Gas enthaltenen Teerverbindungen gespalten werden. Das Brenngas wird anschließend auf ca. 60 °C abgekühlt, filtriert und einem Gasmotor zugeleitet, welcher einen elektrischen Generator antreibt.

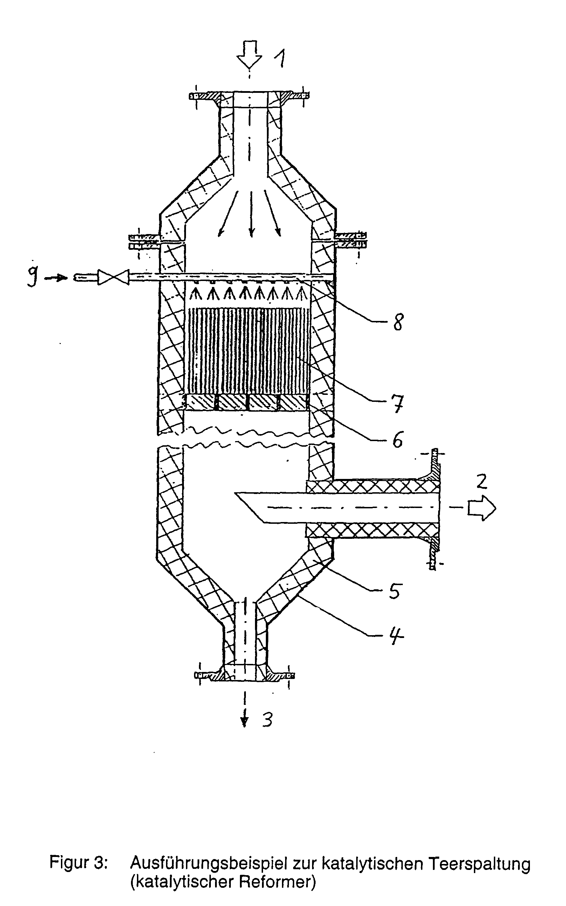

Die Figur 3 zeigt ein Ausführungsbeispiel der Vorrichtung zu katalytischen Teerspaltung (katalytischer Reformer).

Das heiße Rohgas tritt durch einen Rohrstutzen **1** in den Reaktor ein, der durch einen Behälter **4** und eine thermische Isolierung **5** ausgebildet ist. Innerhalb des Reaktors sind eine oder mehrere Ebenen mit den Wabenkatalysatoren **7** angeordnet, die jeweils durch eine Tragkonstruktion **6** gehalten werden. Auf der Anströmseite der Wabenkörper **8** ist eine vorgelagerte Vorrichtung **8** angeordnet, durch die das Spül- und Regeneriergas **9** in periodischen Zyklen auf die Wabenkörper gedüst werden kann. Das entteerte Brenngas verläßt den Reaktor durch einen seitlichen Rohrstutzen **2** während sich im Bodenraum Flugstaub ansammeln kann, der durch einen Ablaßstutzen **3** ausgeschleust werden kann.

**In Betracht gezogene Veröffentlichungen**

**Patentschriften**

JP60235634
DE-OS-1542624
EP0360505
DE19721630C1
DE4430645A1

**Fachveröffentlichungen**

ALDEN, H.; ESPENÄS, B. G.; RENSFELT, E.: Conversion of tar in pyrolysis gas from wood using a fixed dolomite bed, Research in thermochemical Biomass Conversion, 1988

BORN, M.; Berghoff, R.: Vergasungsverfahren für die Entsorgung von Abfällen. Springer-VDI- Verlag, 1998

OLIVARES, A.; AZNAR, M. P.; CABALLERO, M. A.; GIL, J.; FRANCES, E.; CORELLA, J.: Biomass Gasification: Produced Gas Upgrading by In-Bed Use of Dolomite. Ind. Eng. Chem. Res., 36,1997

ORIO, A.; CORELLA, J.; Narvaez, I.: Performance of Different Dolomites on Hot Raw Gas Cleaning from Biomass Gasification with Air, Ind. Eng. Chem. Res., 36, 1997

RENSFELT, E.: Atmospheric CFB Gasification. Tagungsband 'Gasification and pyrolysis of biomass', Stuttgart, 1997

SIMELL, P. A.; LEPPÄLAHTI J. K.; BREDENBERG, J. B.:
Catalytic purification of tarry fuel gas with carbonate rocks and ferrous materials. FUEL, Vol 71, 1992

SIMELL, P. A.; KURKELA, E.; STAHLBERG, P.:
Formation and catalytic decomposition of tars from fluidized-bed gasification, Research in thermochemical Biomass Conversion, Vol 1, 1994

THOME-KOZMIENSKY, K. J.:
Pyrolyse von Abfällen. EF-Verlag, 1985

**Sonstige Fachliteratur**

NETZ. H.:
Verbrennung und Gasgewinnung bei Festbrennstoffen, Resch-Verlag, 1982

HALLGREN, A.:
Theoretical and Engineering Aspects on the Gasification of Biomass, Dissertation, 1996
Handbook of Biomass Downdraft Gasifier Engine Systems, US Department of Energy, 1988

**Patentansprüche**

1. Vorrichtung zur Nutzung von, bei einer Vergasung von Biomasse entstehenden Gasen für eine direkte Energieumwandlung, mit

   - einer Vergasereinheit, in die die zu vergasende Biomasse einbringbar ist und in der Zufuhr eines Vergasungsmittels Brenngase entstehen,
   - einer der Vergasereinheit nachgeschalteten Gasreinigungseinheit,
   - einer der Gasreinigungseinheit nachfolgenden Gaskühleinheit,
   - einer der Gaskühleinheit nachfolgenden Entstaubungseinheit (=Filter) sowie
   - einer, die in den gereinigten und gekühlten Gasen enthaltenen Energie wenigstens teilweise in elektrischen Strom umwandelnden Einheit,

   **dadurch gekennzeichnet, dass** die Gasreinigungseinheit katalytisch aktives Material aufweist, das unmittelbar den aus der Vergasereinheit austretenden Gasen exponiert ist.

2. Vorrichtung nach Anspruch 1,
   **dadurch gekennzeichnet, dass** das katalytisch aktive Material derart gewählt ist, **dass** die aus der Vergasereinheit austretenden Gase, die als wesentliche Brenngasbestandteile Wasserstoff, Kohlenmonoxid, Methan, Kohlendioxid und Wasserdampf sowie als Nebenprodukte auch höhere Kohlenwasserstoffe (=Teere) enthalten, im Wege einer katalytischen Spaltung gemäß den nachfolgenden Reaktionsgleichungen umwandelbar sind:

$$C_nH_m + n\,H_2O \rightarrow n\,CO + (n+m/2)\,H_2$$

$$C_nH_m + n\,CO_2 \rightarrow 2n\,CO + (m/2)\,H_2$$

mit:

| | |
|---|---|
| $C_nH_m$ | Kohlenwasserstoffverbindung ~ Teere |
| $H_2O$ und $CO_2$ | Gaskomponenten. |

3. Vorrichtung nach Anspruch 1 oder 2,
   **dadurch gekennzeichnet, dass** das katalytisch aktive Material aus einem oder aus mehreren katalytisch aktiven Materialien zusammengesetzt ist.

4. Vorrichtung nach einem der Ansprüche 1 bis 3,
   **dadurch gekennzeichnet, dass** die Gasreinigungseinheit einen thermisch isolierten Vollraumreaktor vorsieht, der über eine Zuleitung verfügt, durch die die aus der Vergasereinheit austretenden Gase in den Vollraumreaktor einbringbar sind,

   **dass** längs in Strömungsrichtung der Gase innerhalb des Vollraumreaktors Strömungskanäle angeordnet sind, zumindest an deren Oberflächen das katalytisch aktive Material vorgesehen ist, und
   **dass** eine Ableitung am Vollraumreaktor vorgesehen ist, durch die die katalytisch gespaltenen Gase aus dem Vollraumreaktor austreten.

5. Vorrichtung nach Anspruch 4,
   **dadurch gekennzeichnet, dass** die Strömungskanäle wabenartige Strömungsquerschnitte aufweisen.

6. Vorrichtung nach Anspruch 4 oder 5,
   **dadurch gekennzeichnet, dass** in Strömungsrichtung den Strömungskanälen vor- oder nachgelagert, eine Reinigungseinheit für die Strömungskanäle vorgesehen ist, vermittels der Spül- und Reinigungsgase, in Form von Freistrahlen aus Sauerstoff, Stickstoff, Kohlendioxid oder Wasserdampf oder ein Gemisch aus diesen Gasen in die Strömungskanäle einbringbar ist.

7. Vorrichtung nach einem der Ansprüche 1 bis 6,
   **dadurch gekennzeichnet, dass** der Vollraumreaktor Betriebstemperaturen von 700 bis 1000°C standhält.

8. Vorrichtung nach einem den Ansprüche 1 bis 7,

**dadurch gekennzeichnet, dass** die Gasreinigungseinheit einen Gasfilter in Art eines Heißgasfilters vorsieht, der zwischen der Vergasereinheit und dem katalytisch aktiven Material platziert ist, und

**dass** der Heißgasfilter ein Filtermedium aufweist, das aus einem hitzebeständigem keramischen oder metallischen Werkstoff besteht.

9. Vorrichtung nach einem der Ansprüche 1 bis 8, **dadurch gekennzeichnet, dass** die Vergasereinheit und die Gasreinigungseinheit und/oder die Gasreinigungseinheit und die Gaskühleinheit als eine Baueinheit ausgebildet sind.

10. Vorrichtung nach einem der Ansprüche 1 bis 9, **dadurch gekennzeichnet, dass** die im Wege der katalytischen Spaltung gereinigten und nachfolgend gekühlten und entstaubten Gase direkt der Energie umwandelnden Einheit zuführbar sind.

11. Vorrichtung nach Anspruch 1 bis 10, **dadurch gekennzeichnet, dass** die Energie umwandelnde Einheit ein Gasmotor, eine Gasturbine, eine Brennstoffzelle oder ein Stirlingmotor ist.

Figur 1: Verfahrensschema

Figur 2: Ausführungsbeispiel einer erfindungsgemäßen
Vorrichtung

Figur 3: Ausführungsbeispiel zur katalytischen Teerspaltung
(katalytischer Reformer)